# EUROPÄISCHE PATENTSCHRIFT

(11) **EP 1 123 231 B1**
(45) Veröffentlichungstag und Bekanntmachung des Hinweises auf die Patenterteilung: **16.07.2003**
(21) Anmeldenummer: 99953775.6
(22) Anmeldetag: 12.10.1999
(51) Int. Cl.: B60T 10/02, B60T 1/087

(54) **VERFAHREN UND VORRICHTUNG ZUR ERHÖHUNG DER BREMSMOMENTENAUSNUTZUNG EINES RETARDERS IN EINEM KRAFTFAHRZEUG**
METHOD AND DEVICE FOR INCREASING THE USE OF THE BRAKING MOMENT OF A RETARDER IN AN AUTOMOBILE
PROCEDE ET DISPOSITIF PERMETTANT UNE MEILLEURE EXPLOITATION DU COUPLE DE FREINAGE D'UN RALENTISSEUR DANS UN VEHICULE AUTOMOBILE

(30) Priorität: 22.10.1998 DE 19848544
(43) Veröffentlichungstag der Anmeldung: 16.08.2001
(73) Patentinhaber: Voith Turbo GmbH & Co. KG, 89522 Heidenheim (DE)
(72) Erfinder: FRIEDRICH, Jürgen, D-74564 Crailsheim (DE); VOGELSANG, Klaus, D-74564 Crailsheim (DE)
(74) Vertreter: Sawodny, Michael-Wolfgang
(86) Internationale Anmeldenummer: EP9907624
(87) Internationale Veröffentlichungsnummer: WO00024622

(56) Entgegenhaltungen:
- WO-A-95/01500
- DE-A- 19 641 558
- DE-U- 29 707 304
- US-A- 5 261 513
- US-A- 5 531 190
- US-A- 5 609 125

## Beschreibung

Die Erfindung betrifft ein Verfahren zur Erhöhung der Bremsmomentenausnutzung eines Retarders in einem Kraftfahrzeug, wobei die während des Bremsens erzeugte Wärme des Retarders mit Hilfe eines Kühlmediums abgeführt wird gemäß dem Oberbegriff des Anspruchs 1 sowie eine Steuer-/Regelvorrichtung hierfür gemäß Anspruch 9.

Zur Kühlung von Fahrzeugkomponenten, beispielsweise hydrodynamischen Bremsen, Verbrennungsmotoren, etc., werden heute in der Regel Kühlkreisläufe, umfassend ein Kühlmittel, vorzugsweise Wasser mit den entsprechenden Frostschutzzusätzen, eingesetzt. Dabei durchströmt eine bestimmte Kühlmittelmenge pro Zeiteinheit das zu kühlende Bauteil, nimmt dabei die abzuführende Wärme des Bauteiles auf und transportiert diese zu einem Kühler, beispielsweise einem Rippenkühler oder zu einem Wärmetauscher, in dem die aufgenommene und transportierte Wärmemenge an die Umgebung oder einen anderen Kühlmittelkreis abgegeben wird. Die Kühlleistung eines solchen Systems wird im wesentlichen durch die Leistungsfähigkeit der einzelnen Systemkomponenten, beispielsweise der Förderleistung der Kühlmittelpumpe, bestimmt.

Um das Motorkühlsystem bei eingeschaltetem Retarder vor Überhitzung zu schützen, wurde daher in der
WO-A 9427845
vorgeschlagen, die Retarderbremsleistung in Abhängigkeit von der Motordrehzahl und damit der Kühlmittelpumpendrehzahl zu reduzieren.

Nachteilig an diesem Verfahren bzw. dieser Steuerung war, daß das Retarderbremsmoment sehr frühzeitig reduziert wurde und hierdurch die Bremsleistung des Retarders nur ungenügend ausgenutzt wurde.

Aus der WO-A-9501500 ist ein Fahrzeugkühlkreislauf bekannt geworden, bei dem eine zusätzliche Kühlmittelpumpe in Gang gesetzt wird, wenn der Retarder eingeschaltet wird.

Aufgabe der Erfindung ist es, ein Verfahren und eine Vorrichtung zur Durchführung des Verfahrens anzugeben, mit dem die Nachteile des Standes der Technik vermieden werden und das Retarderbremsmoment besser als bislang ausgenutzt werden kann, d.h. die Retarderverfügbarkeit erhöht wird.

Erfindungsgemäß wird diese Aufgabe dadurch gelöst, daß bei einem Fahrzeug mit nur einer einzigen Kühlmittelpumpe im Kühlkreislauf in Abhängigkeit vom augenblicklichen oder künftigen Bremsbedarf, wenigstens ein Nebenverbraucher und/oder wenigstens eine der nachfolgenden Einrichtungen des Kühlsystemes im Fahrzeug angesteuert werden:
- ein geschalteter Lüfter
- ein geschalteter Thermostat
- eine Kühlmittelpumpe
- ein Bypass-Ventil.

Besonders vorteilhaft ist es, wenn wenigstens die nachfolgenden Retarderbetriebszustände
- Einschalten des Retarders
- Ausschalten des Retarders
- angeforderte bzw. tatsächlich eingelegte Bremsstufe des Retarders
unterschieden werden. Bezüglich der Ansteuerung sind die folgenden Varianten denkbar:
- es geht alles über die Motorsteuerung. Diese steuert den Motor, den Lüfter sowie den Retarder; oder
- jedes der genannten Aggregate hat seine eigene Steuerung; diese kommuniziert miteinander; oder
- Retarder und Lüfter haben eine gemeinsame Steuerung.

Eine besonders interessante Variante besteht darin, nicht oder nicht nur den augenblicklichen Bremsbedarf, sondern auch den künftigen Bremsbedarf im Sinne eines vorausschauenden Fahrens zu erfassen. Dabei kann der künftige Bremsbedarf durch ein Navigationssystem definiert werden, bei dem die vorausliegende Strecke beispielsweise über Satellitensystems angepeilt wird (sogenanntes Global Position System).

Man kann gemäß der Erfindung eine Erhöhung der Retarder-Verfügbarkeit bezogen auf die maximal mögliche Bremsmomentenhöhe dadurch erreichen, daß ein geschalteter Lüfter, beispielsweise der des Fahrzeugkühlers, bei Vorliegen des Retarder-Einschaltbefehles durch die Retarder-Elektronik zugeschaltet wird, wodurch die Leistungsfähigkeit des Kühlsystems erhöht wird.

Um bei ausgeschaltetem Retarder durch den zugeschalteten Lüfter nicht unnötig Kraftstoff zu verbrauchen, ist vorgesehen, daß bei Vorliegen des Retarder-AUS-Befehles der Lüfter wieder freigegeben bzw. abgeschaltet wird. Eine Ansteuerung erfolgt dann lediglich über die Sensoren des Motorkühlsystems. Alternativ zu einer Abschaltung bzw. Freigabe des Lüfters bei ausgeschaltetem Retarder kann auch vorgesehen sein, den Kühler bereits bei Unterschreiten eines bestimmten, niedrig vorzugebenden Retarderbremsmomentes abzuschalten bzw. freizugeben.

Neben einer reinen EIN-AUS-Logik wie oben beschrieben ist mit Vorteil vorgesehen, daß bei mehrstufigen oder stufenlos regelbaren Lüftern die Ansteuerung des Lüfters in Abhängigkeit von der angeforderten Retarderbremsleistung, beispielsweise der eingelegten Retarderbremsstufe, erfolgt. Prinzipiell arbeitet der gemäß der Erfindung bei hohen Retarderbremsstufen mit hoher Drehzahl, wohingegen bei niedrigen Retarderbremsstufen der Lüfter entweder ganz freigegeben wird oder nur mit verminderter Drehzahl läuft.

In einer weiteren, fortgebildeten Ausführungsform der Erfindung kann vorgesehen sein, daß der vorzugsweise als Zwei-/Drei-Wege-Ventil ausgebildete Thermostat beispielsweise im Motorkühlkreislauf des Fahrzeugkühlsystems in Abhängigkeit von Retarderbetriebszuständen geschaltet wird.

Es kann vorgesehen sein, daß wenn das Kühlsystem im Bypassbetrieb läuft, d.h. die Kühlflüssigkeit am Fahrzeugkühler vorbeigeleitet wird, nach Einschalten des Retarders das Zwei-/Drei-Wege-Ventil derart angesteuert wird, daß Kühlflüssigkeit durch den Fahrzeugkühler strömt, um so die Kühlleistung des Kühlsystems zu erhöhen.

Die Retarderverfügbarkeit kann weiter gesteigert werden, wenn nicht nur Lüfter und Bypassventil in Abhängigkeit vom Bremsbedarf angesteuert werden, sondern auch eine Kühlmittelpumpe, sofern es sich um eine Kühlmittelpumpe handelt, deren Drehzahl angesteuert bzw. geregelt werden kann. Bei derartigen Ausführungsformen kann vorgesehen sein, daß die Drehzahl der Kühlmittelpumpe dann erhöht wird, wenn der Retarder eingeschaltet wird, und auf Normalmaß zurückgefahren wird, wenn der Retarder ausgeschaltet wird. Bei einer Kühlmittelpumpe, deren Drehzahl eingestellt werden kann, ist es auch möglich, die Drehzahl in Abhängigkeit von der gewählten Retarderbremsstufe zu wählen.

Um die vom Retarder erzeugte Wärme noch besser als bislang und nicht ausschließlich über das Kühlsystem und von dort in die Umgebung abführen zu müssen, ist vorgesehen, Nebenverbraucher im Fahrzeug, die nicht permanent im Einsatz sein müssen, einzuschalten, wenn der Retarder eingeschaltet wird, um Bremsarbeit in Nutzarbeit zu wandeln, so daß die Energie sinnvoller genutzt werden kann.

Handelt es sich bei dem Retarder um einen Sekundärretarder, auf den die Erfindung keinesfalls beschränkt sein muß, so ist diesem in der Regel ein eigener Wärmetauscher zugeordnet. Besitzt der Wärmetauscherkreis wie das Motorkühisystem einen Bypass, so kann in einer besonderen Ausgestaltung der Erfindung für derartige Retarder vorgesehen sein, daß analog zum Kühlerbypass-Ventil der Wärmetauscher-Bypass geschaltet wird, d.h. im Bremsbetrieb des Retarders relevante Kühlmedium durch den Wärmetauscher geführt, bei ausgeschaltetem Retarder an diesem vorbei.

Neben dem oben beschriebenen Verfahren stellt die Erfindung auch eine Steuervorrichtung zur Durchführung des Verfahrens zur Verfügung. Erfindungsgemäß ist vorgesehen, daß das Steuer- bzw. Regelsystem Mittel zur Erfassung der Retarderbetriebszustände bzw. des augenblicklichen oder künftigen Bremszustandes, beispielsweise Sensoren, umfaßt, sowie eine Steuer-/Regelvorrichtung, die Fahrzeugaggregate wie beispielsweise Nebenaggregate und/oder Einrichtungen des Kühlsystems in Abhängigkeit von den aufgenommenen Retarderbetriebszuständen ansteuert.

Die Erfindung soll nunmehr anhand der Zeichnungen beispielhaft beschrieben werden.

Es zeigen:
- Fig. 1:: in schematischer Darstellung ein Fahrzeugkühlsystem gemäß der Erfindung mit einem Retarder, der als Primärretarder arbeitet.
- Fig. 2:: in schematischer Darstellung ein Fahrzeugkühlsystem gemäß der Erfindung mit einem Retarder, der als Sekundärretarder arbeitet.

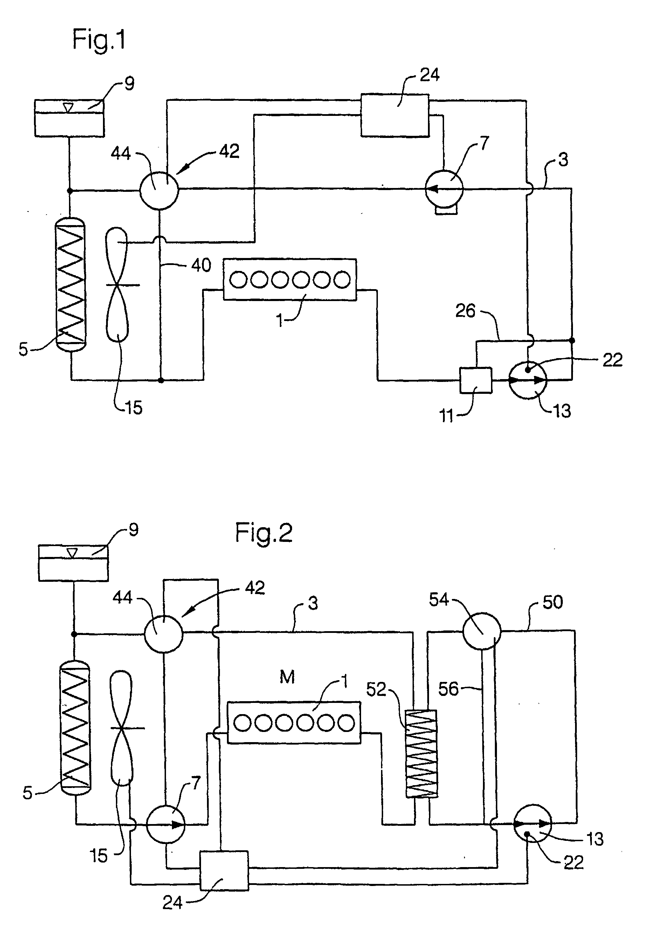

In Figur 1 ist eine Antriebseinheit bestehend aus einem Motor 1 sowie einem Kühlkreislauf 3 dargestellt. Der Kühlkreislauf 3 umfaßt einen Kühler 5, eine Kühlmittelpumpe 7, die vorliegend als drehzahlgeregelte Kühlmittelpumpe ausgelegt ist, sowie einen Ausgleichsbehälter 9, der pumpensaugseitig immer für einen ausreichenden Überdruck sorgt. Bei der in Fig. 1 dargestellten Ausführungsform handelt es sich um einen Primärretarder 13, der im Kühlkreislauf angeordnet ist. Durch Umschaltventil 11 ist es möglich, Kühlmittel bei ausgeschaltetem Retarder am Fahrzeug vorbeizuführen. Die Erfindung beschränkt sich aber keinesfalls nur auf Primärretarder, die wie in Fig. 1 im Kühlmittelkreislauf des Motors angeordnet sind. Die Erfindung ist auch anwendbar, wenn der Kühlkreislauf von Motor und Retarder getrennt sind.

Am Kühler führt eine Bypassleitung 40 vorbei, die sich im Punkt 42 verzweigt. Im Punkt 42 ist ein Umschaltventil bzw. Thermostat 44 angeordnet, das als 3/2-Wege-Ventil ausgelegt sein kann. Das 3/2-Wege-Ventil hat die Funktion, den Kühlmittelstrom so zu steuern, daß er entweder durch den Kühler oder aber durch die Bypassleitung 40 am Kühler vorbei geführt werden kann. Allgemein gilt, daß in Betriebsphasen mit hoher Wärmeabfuhr das 3/2-Wege-Ventil den Kühlstrom teilweise oder größtenteils zum Kühler 5 leitet. In der Phase geringer Wärmeabführung steuert das 3/2-Wege-Umschaltventil 44 das Kühlmittel über die Bypassleitung zum Motor 1 bzw. zur Pumpe 7. Das 3/2-Wege-Ventil kann als Dehnstoffregelventil ausgeführt sein oder als elektrisches oder pneumatisches stetig regelndes Ventil.

Als weiteres Aggregat des Kühlsystems ist Lüfter 15 hinter dem Fahrzeugkühler 5 angeordnet. Der Lüfter 15 ist vorzugsweise schaltbar ausgeführt. Der Retarderbetriebszustand, d.h. eingeschalteter Retarder, ausgeschalteter Retarder, Bremsstufe des Retarders, wird beispielsweise vom Sensor 22 erkannt oder vom Retarderbedienhebel, der vorliegend nicht dargestellt ist, abgegriffen und an die Steuer-/Regeleinheit 24 übermittelt.

In Abhängigkeit vom sensierten bzw. übermittelten Signal steuert die Steuer/Regeleinheit 24 die verschiedenen Aggregate des Kühlsystems wie beispielsweise Lüfter, 3/2-Wege-Ventil oder aber Fahrzeugnebenaggregate, die nicht ständig im Einsatz sind und über die Wärme abgeführt werden kann.

Beispielsweise kann beim Einschalten des Retarders der Lüfter 15 aktiviert werden, und so die Kühlleistung des Fahrzeugkühlsystemes erhöht werden. Hierdurch steht sofort beim Einschalten des Retarders die volle Bremsleistung bzw. das maximale Bremsmoment des Retarders zur Verfügung.

Ebenso wie der Lüfter kann das Umschaltventil 42, falls es sich in Bypass-Stellung befindet und über den Bypass 40 die Wärme am Kühler vorbeigeleitet wird, aktiviert werden, so daß Kühlmittel durch den Kühler geführt wird. Selbstverständlich ist es möglich, in einer besonders vorteilhaften Ausgestaltung die Aktivierung des Umschaltventils 42 und des Lüfters 15 miteinander zu koordinieren bzw. aufeinander abzustimmen. So kann beispielsweise das Umschaltventil auf Kühlerdurchfluß geschaltet und anschließend die Lüfterdrehzahl erhöht werden. Sinkt die angeforderte Bremsleistung bzw. das Bremsmoment unter einen bestimmten Wert ab, so kann zunächst der Lüfter 15 ausgeschaltet werden. Erst beim vollständigen Abschalten des Retarders wird das Thermostatventil 44 wieder auf Bypass-Betrieb geschaltet.

In einer fortgebildeten Ausführungsform kann vorgesehen sein, daß die Lüfterdrehzahl in Abhängigkeit von der jeweiligen Retarderbremsstufe angesteuert wird. Beispielsweise kann bei hoher Retarderbremsstufe, d.h. hoher Bremsmomentanforderung und damit Bedarf für große Wärmeabfuhr, die Drehzahl des Lüfters erhöht werden, während sie bei niedriger Bremsmomentanforderung abgesenkt wird.

Neben dem Lüfter und dem Umschaltventil 42 ist in der in Fig. 1 dargestellten Ausführungsform eines Fahrzeugkühlsystems eine drehzahlgeregelte Kühlmittelpumpe 7 vorgesehen.

Die drehzahlgeregelte Kühlmittelpumpe 7 wird ebenfalls von der Steuer/Regelvorrichtung 24 angesteuert. Beispielsweise kann bei Vorliegen eines Retarder-EIN-Befehls die Drehzahl der Kühlmittelpumpe auf einen vorbestimmten, wesentlich höheren Wert wie im normalen Fahrbetrieb, gestellt werden. Die Förderleistung im Kühlkreislauf wird angehoben und es kann mehr Wärme als im Normalbetrieb abgeführt werden.

Unterschreitet das Bremsmoment bzw. die abgeforderte Bremsleistung einen bestimmten Wert, so kann die Drehzahl der Pumpe erniedrigt werden, bei ausgeschaltetem Retarder auf den allein vom Motorkühlsystem benötigten Wert. Durch das Herabfahren der Pumpendrehzahl wie auch der Lüfterdrehzahl sowie Umschalten des Bypassventils **42** bei Vorliegen des Retarder-AUS-Befehles ist es möglich, den Kraftstoffverbrauch im Fahrbetrieb zu minimieren, da nicht benötigte Komponenten nicht mitlaufen.

Andererseits wird durch die Hinzuschaltung der oben erwähnten Aggregate bei Vorliegen eines Retarder-EIN-Befehles oder einer vorbestimmten Bremsstufe die Retarderverfügbarkeit gegenüber den bislang bekannten Steuer-/Regelsystemen erhöht.

In Fig. 2 ist eine alternative Ausführungsform der Erfindung dargestellt. Wiederum ist der Kühlkreislauf des Motors 3 dargestellt.

Entgegen dem Retarder, der in Fig. 1 dargestellt ist, handelt es sich bei dem Retarder 13 in Fig. 2 um einen sogenannten Sekundärretarder, der vorzugsweise am Fahrzeuggetriebe bzw. an der Abtriebswelle angeordnet ist. Die Wärmeabfuhr erfolgt bei einem derartigen System vorzugsweise über einen separaten Retarderkühlkreislauf 50, der die Wärme über den Wärmetauscher 52 an das Fahrzeugkühlsystem 3 abgibt.

Wie in Fig. 1 wird über Steuer-/Regelvorrichtung 24 bei Vorliegen von bestimmten Retarderbetriebszuständen, die entweder von Sensor 22 oder beispielsweise dem Retardersteuerbedienhebel an die Steuer/Regeleinrichtung 24 übermittelt wird, der Lüfter 15, das Umschaltventil 42 und die drehzahlgeregelte Kühlmittelpumpe 7 angesteuert.

Zusätzlich hierzu kann bei der Ausführungsform gemäß Fig. 2 vorgesehen sein, daß auch das Umschaltventil 54 im Retarderkühlkreislauf 50 angesteuert wird, und zwar bei eingeschaltetem Retarder derart, daß das Kühlmittel nicht über Bypass 56 sondern über Wärmetauscher 52 geleitet wird.

Neben der Ansteuerung der zuvor ausführlich beschriebenen Aggregate des Kühlsystems kann vorgesehen sein, daß auch Nebenaggregate im Fahrzeug angesteuert werden, die nicht ständig eingesetzt werden müssen, um die Wärmeabfuhr zu unterstützen. Durch diese Maßnahme kann die Retarderverfügbarkeit weiter erhöht werden.

Mit der Erfindung wird somit erstmals ein System angegeben, mit dem die Bremswirkung eines Retarders direkt nach dem Einschalten maximal genutzt werden kann, indem zusätzliche Aggregate des Kühlsystems bzw. Nebenaggregate des Fahrzeugs angesteuert werden.

## Patentansprüche

1. Verfahren zur Erhöhung der Bremsmomentenausnutzung eines Retarders in einem Kraftfahrzeug mit einem Kühlsystem, das eine einzige Kühlmittelpumpe umfaßt, wobei die während des Bremsens erzeugte Wärme des Retarders mit Hilfe eines Kühlmediums abgeführt wird, das Verfahren ist **dadurch gekennzeichnet, daß** in Abhängigkeit vom augenblicklichen oder künftigen Bremsbedarf wenigstens ein Nebenverbraucher und/oder wenigstens eine der nachfolgenden Einrichtungen des Kühlsystems angesteuert wird:
- ein geschalteter Lüfter
- ein geschalteter Thermostat
- die Kühlmittelpumpe
- ein Bypass-Ventil.

2. Verfahren nach Anspruch 1, **dadurch gekennzeichnet, daß** wenigstens die nachfolgenden Retarderbetriebszustände unterschieden werden:
- das Einschalten des Retarders
- das Ausschalten des Retarders
- das Bremsen des Retarders mit vorgegebener Bremsstufe.

3. Verfahren nach Anspruch 2, **dadurch gekennzeichnet, daß** beim Einschalten des Retarders der Lüfter ein- und beim Ausschalten des Retarders der Lüfter des Fahrzeugkühlers ausgeschaltet wird.

4. Verfahren nach Anspruch 3, **dadurch gekennzeichnet, daß** die Drehzahl des Lüfters in Abhängigkeit von der Retarderbremsstufe und/oder ein Signal der Temperatur der Kühlmittelflüssigkeit eingestellt wird.

5. Verfahren nach einem der Ansprüche 1 bis 4, **dadurch gekennzeichnet, daß**
der als 3/2-Wege-Ventil ausgebildete Thermostat des Fahrzeugkühlsystems derart geschaltet wird, daß das gesamte Kühlmittel den Fahrzeugkühler durchströmt, wenn der Retarder eingeschaltet wird.

6. Verfahren nach einem der Ansprüche 1 bis 5, **dadurch gekennzeichnet, daß**
die Drehzahl der Kühlmittelpumpe erhöht wird, wenn der Retarder eingeschaltet wird.

7. Verfahren nach einem der Ansprüche 1 bis 6, **dadurch gekennzeichnet, daß**
im Bremsbetrieb zum Zwecke der Steigerung der Bremswirkung Nebenverbraucher zugeschaltet werden.

8. Verfahren nach Anspruch 7, **dadurch gekennzeichnet, daß**
die Nebenverbraucher über ihren eigentlichen Bedarf hinaus betrieben werden.

9. Steuer-/Regelsystem zur Durchführung eines Verfahrens gemäß einem der Ansprüche 1 bis 8 zur Erhöhung der Bremsmomentenausnutzung eines Retarders in einem Fahrzeug mit einem Kühlsystem, das eine einzige Kühlmittelpumpe umfasst, mit
- Mitteln zur Erfassung des augenblicklichen oder künftigen Bremsbedarfs
- einer Steuer-/Regelvorrichtung
**dadurch gekennzeichnet, daß**
die Steuervorrichtung wenigstens ein Nebenaggregat und/oder eine der nachfolgenden Einrichtungen des Kühlsystems in Abhängigkeit vom erfaßten Retarderbetriebszustand ansteuert:
- ein geschalteter Lüfter
- ein geschalteter Thermostat
- die Kühlmittelpumpe
- ein Bypass-Ventil.

## Claims

1. A method for increasing the brake torque utilization of a retarder in a motor vehicle with a cooling system which comprises a single coolant pump, with the heat of the retarder as produced during the braking being removed with the help of a cooling medium, with the method being **characterized in that** depending on the momentary or future braking demand at least one secondary consumer and/or at least one of the downstream devices of the cooling system is triggered:
- a switched fan;
- a switched thermostat;
- a coolant pump;
- a bypass valve.

2. A method as claimed in claim 1, **characterized in that** at least the following retarder operating states are differentiated:
- the activation of the retarder;
- the deactivation of the retarder;
- the braking of the retarder with a predetermined braking stage.

3. A method as claimed in claim 2, **characterized in that** on activating the retarder the fan is switched on and on deactivating the retarder the fan of the vehicle radiator is switched off.

4. A method as claimed in claim 3, **characterized in that** the speed of the fan is set depending on the retarder braking stage and/or a signal of the temperature of the coolant liquid.

5. A method as claimed in one of the claims 1 to 4, **characterized in that** the thermostat of the vehicle cooling system which is configured as a 3/2-way valve is switched in such a way that the entire coolant flows through the vehicle radiator when the retarder is activated.

6. A method as claimed in one of the claims 1 to 5, **characterized in that** the speed of the coolant pump is increased when the retarder is activated.

7. A method as claimed in one of the claims 1 to 6, **characterized in that** secondary consumers are activated in braking operation for the purpose of increasing the braking effect.

8. A method as claimed in claim 7, **characterized in that** the secondary consumers are operated beyond their actual demand.

9. An open-loop/closed-loop control system for performing the method according to one of the claims 1 to 8 for increasing the braking torque utilization of a retarder in a vehicle with a cooling system comprising a single coolant pump, comprising
- means for detecting the momentary or future braking demand;
- an open-loop/closed-loop control apparatus,
**characterized in that**
the control apparatus triggers at least one auxiliary unit and/or one of the downstream devices of the cooling system depending on the detected operating state of the retarder:
- a switched fan;
- a switched thermostat;
- a coolant pump;
- a bypass valve.

## Revendications

1. Procédé permettant une meilleure exploitation du couple de freinage d'un ralentisseur dans un véhicule automobile, avec un système de refroidissement qui comprend une unique pompe à fluide de refroidissement, où la chaleur du ralentisseur générée pendant le freinage est évacuée au moyen d'un fluide de refroidissement, le procédé étant **caractérisé en ce que**, en fonction de la demande de freinage instantanée ou ultérieure, au moins un consommateur d'énergie secondaire et/ou un des dispositifs suivants du système de refroidissement est activé :
- un ventilateur commuté
- un thermostat commuté
- la pompe à fluide de refroidissement
- une soupape de dérivation.

2. Procédé selon la revendication 1, **caractérisé en ce que** l'on distingue au moins les états suivants de fonctionnement du ralentisseur :
- la mise en circuit du ralentisseur
- la mise hors circuit du ralentisseur
- le freinage du ralentisseur avec cran de freinage préréglé.

3. Procédé selon la revendication 2, **caractérisé en ce que** lors de la mise en circuit du ralentisseur, le ventilateur est mis en circuit et lors de la mise hors circuit du ralentisseur, le ventilateur du radiateur du véhicule est mis hors circuit.

4. Procédé selon la revendication 3, **caractérisé en ce que** la vitesse de rotation du ventilateur est réglée en fonction du cran de freinage du ralentisseur et/ou d'un signal de température du liquide de refroidissement.

5. Procédé selon l'une des revendications 1 à 4, **caractérisé en ce que** le thermostat du système de refroidissement du véhicule conçu comme une électrovanne, est mis en circuit de sorte que tout le fluide de refroidissement traverse le radiateur du véhicule lorsque le ralentisseur est mis en circuit.

6. Procédé selon l'une des revendications 1 à 5, **caractérisé en ce que** la vitesse de rotation de la pompe à fluide de refroidissement est augmentée lorsque le ralentisseur est mis en circuit.

7. Procédé selon l'une des revendications 1 à 6, **caractérisé en ce qu'**en mode de freinage, des consommateurs d'énergie secondaires sont mis en circuit dans le but d'augmenter l'action de freinage.

8. Procédé selon la revendication 7, **caractérisé en ce que** les consommateurs d'énergie secondaires sont exploités au-delà de leur propre demande.

9. Système de commande et de régulation pour la mise en oeuvre d'un procédé selon l'une des revendications 1 à 8, permettant une meilleure exploitation du couple de freinage d'un ralentisseur dans un véhicule avec un système de refroidissement qui comprend une unique pompe à fluide de refroidissement avec
- des moyens pour saisir la demande de freinage instantanée ou ultérieure,
- un dispositif de commande et de régulation,
**caractérisé en ce que** le dispositif de commande active au moins un élément auxiliaire et/ou un des dispositifs suivants du système de refroidissement, en fonction de l'état de fonctionnement saisi du ralentisseur :
- un ventilateur commuté
- un thermostat commuté
- la pompe à fluide de refroidissement
- une soupape de dérivation.
